Europäisches Patentamt

European Patent Office  (11) Veröffentlichungsnummer: **0 019 799**

Office européen des brevets  **B1**

⑱

(12)   **EUROPÄISCHE PATENTSCHRIFT**

(45) Veröffentlichungstag der Patentschrift: **28.08.85**   (51) Int. Cl.⁴: **G 07 C 5/08,** G 11 B 5/027

(21) Anmeldenummer: **80102664.2**

(22) Anmeldetag: **13.05.80**

(54) Vorrichtung zum Registrieren von Betriebszustandsinformationen, insbesondere eines Fahrzeuges.

(30) Priorität: **28.05.79 DE 2921611**

(43) Veröffentlichungstag der Anmeldung:
**10.12.80 Patentblatt 80/25**

(45) Bekanntmachung des Hinweises auf die
Patenterteilung:
**28.08.85 Patentblatt 85/35**

(84) Benannte Vertragsstaaten:
**AT BE CH FR LI NL**

(56) Entgegenhaltungen:
**CH-A- 559 394**
**DE-B-2 552 685**
**US-A-2 089 561**
**US-A-3 792 445**

(73) Patentinhaber: **Siemens Aktiengesellschaft**
**Berlin und München Wittelsbacherplatz 2**
**D-8000 München 2 (DE)**

(72) Erfinder: **Fredrich, Joachim**
**Schlossstrasse 45**
**D-6431 Hohenroda 1 (DE)**
Erfinder: **Klusacek, Michael**
**Rotlinstrasse 22**
**D-6000 Frankfurt/Main (DE)**
Erfinder: **Fredrich, Detlef**
**Schlossstrasse 45**
**D-6431 Hohenroda 1 (DE)**
Erfinder: **Schrumpf, Carl-Eduard, Dipl.-Ing.**
**Kleefeld**
**D-8520 Erlangen (DE)**

Courier Press, Leamington Spa, England.

## Beschreibung

Die Erfindung bezieht sich auf eine Vorrichtung zum Registrieren von Betriebszustandsinformationen, insbesondere eines Fahrzeuges, gemäß dem Oberbegriff des Anspruchs 1.

In DE—B—25 52 685 ist ein Verfahren zum Registrieren von Betriebszustandsinformationen eines beweglichen Gegenstandes, insbesondere eines Fahrzeuges, auf einem Mehrspurmagnetband beschrieben, wobei eine der Spuren zum Aufzeichnen einer Zeitinformation benutzt wird und in jeder Spur mehrere Informationen registrierbar sind. Jedem der zu erfassenden Betriebszustände ist eine bestimmte unter-schiedliche Trägerfrequenz zugeordnet, die ent-sprechend der Größe und/oder Art des jeweiligen Betriebszustandes amplitudenmoduliert wird, wobei zumindest auf einer der Spuren mehrere amplitudenmodulierte Trägerfrequenzen gemeinsam aufgezeichnet werden.

Mit diesem Verfahren bzw. der in seiner Durchführung vorgesehen Vorrichtung werden Informationen erfaßt, deren Eigenfrequenz kleiner ist als die Trägerfrequenz. Stehen Informationen an, deren Eigenfrequenz in die Nähe der Trägerfrequenz kommen, so können beim Ausfiltern der Trägerfrequenz Verzerrungen des Informationssignals auftreten.

Aufgabe des Erfindung ist es, diesen Nachteil zu vermeiden. Diese Aufgabe wird durch die im Kennzeichnungsteil des Anspruchs 1 angegebenen Maßnahmen gelöst.

Die Erfindung ermöglicht es, Betriebszunstandsinformation aufzuzeichnen, deren Impulsdauer sich vom Minutenbereich bis zum Miktrosekundenbereich erstrecken kann. Damit können nicht nur Betriebszustandsinformationen sondern auch zeitlich unbestimmt auftretende Störsignale auch dann registriert werden, wenn sie von kurzer Impulsdauer sind, so daß die Vorrichtung über das Registrieren von Betriebszuständen hinaus zum Diagnostizieren von fehlerhaften Betriebsabläufen verwendet werden kann.

Die Erfindung wird im folgenden anhand einer schematischen Zeichnung näher erläutert.

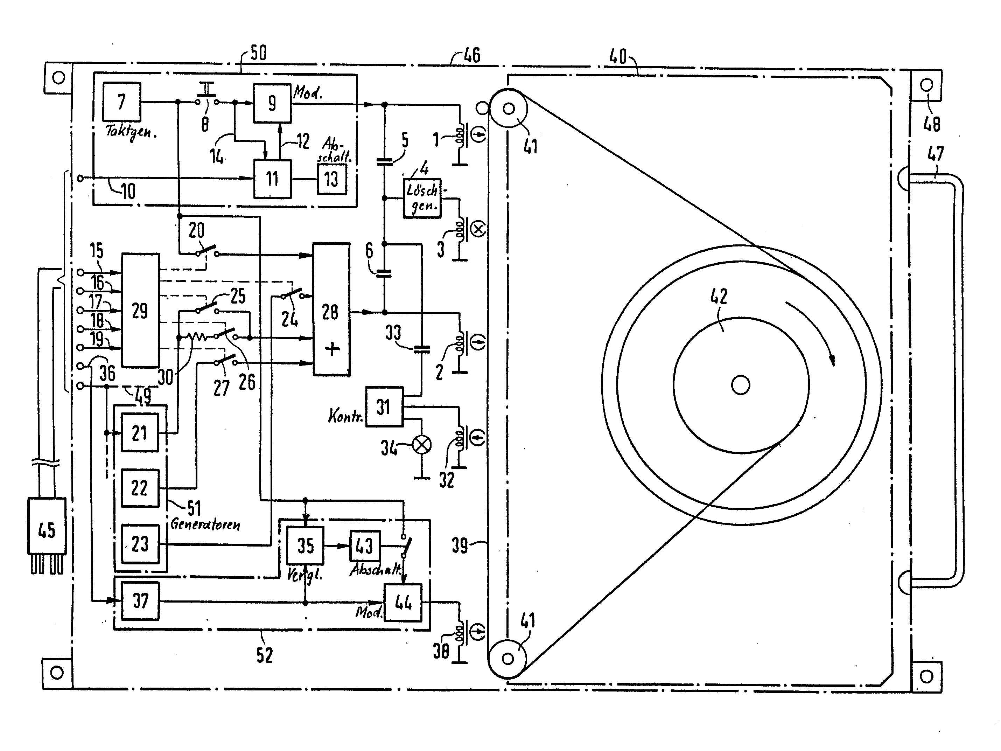

Die Figur zeigt ein als Diagnoseschreiber ausgebildetes Aufnahmegerät, das für den stationären oder mobilen Einsatz ausgebildet ist und ein mehrspuriges Magnetband zum Aufzeichnen von Betriebszustandsinformationen und Registrieren von Signalen besitzt, die fehlerhafte Betriebsabläufe kennzeichnen. In der Regel genügt es, zur Rekonstruktion von Unfallursachen die letzten 10 bis 20 Minuten des tatsächlichen Fahrbetriebes zu registrieren. Bei Fahrzeugen, z.B. Stadt-bahnwagen, werden außer der Fahrgesch-windigket noch ein Stromistwertsignal, Brems-signal, Gefahrenbremssignal (Notbremsung) und ein Forschaltsignal für die Steuerung erfaßt. Fur die Aufzeichnung wird ein mehrspuriges Gerät verwendet. Mit 1 ist die Spule des Aufnahmekopfes einer ersten Spur, mit 2 die Spule des Aufnahmekopfes für eine zweite Spur und mit 3 die Spule eines Löschkopfes bezeichnet, die mit einem Löschoszillator 4 in Verbindung steht, der über Kondensatoren 5 und 6 mit den mit den Spulen der Aufnahmeköpfe 1 und 2 gekoppelt ist. In der ersten Spur wird eine Zeitinformation aufgezeichnet. Zu diesem Zweck ist ein zeitgenauer Taktgenerator 7 vorgesehen, der beispielsweise mit der Taktfrequenz von 4 kHz arbeitet. Die vom Taktgenerator 7 abgegebenen Impulse werden über einen Kontakt 8 einer Taste zur Spur 1 des Aufnahmegerätes geleitet. Der Kontakt 8 kann sowohl von Hand als auch selbsttätig von einer Abschaltautomatik 13 betätigt werden, wie weiter unten noch ausgeführt ist. Mit diesem Kontakt 8 kann die Frequenz des Taktgenerators 7 unterbunden werden, z.B. für Markierungszwecke oder nach einem Unfall. Wie zuvor ausgeführt worden ist, wird die von dem Taktgenerator 7 gelieferte Zeitinformation gleichzeitig als Trägerfrequenz für einen der zu erfassenden Betriebszustände benutzt. Aus diesem Grunde wird die Frequenz des Taktgenerators 7 nicht unmittelbar zum Aufnahmekopf der Spur 1 geleitet, sondern über einen Modulator 9, mit dessen Hilfe die Amplitude der Frequenz des Taktgenerators 7 moduliert wird. Die als Zeitinformation dienende Trägerfrequenz wird von den Signalen eines den Weg des Stadtbahnwagens wiedergebenen Winkelschrittgebers moduliert. Da das Gerät zur nachträglichen Rekonstruktion von Unfällen dienen soll, ist der Winkelschrittgeber mit einer ungebremsten Achse des Stadtbahnwagens verbunden. Die von einem solchen Winkelschrittgeber kommenden Impulse werden über eine Leitung 10 auf eine elektronische Einheit 11 gegeben, in der diese geschwindigkeitsproportionalen Signale entsprechen geformt, verstärkt und für die Modulierung der Trägerfrequenz des Taktgenerators 7 geeignet gemacht werden. Mit einem Pfeil 12 ist angedeutet, daß die von Winkel-schrittgeber kommenden Signale in ent-sprechender Weise auf den Modulator 9 zur Modulierung der Trägerfrequenz des Generators 7 einwirken. Die Trägerfrequenz wird zudem noch über eine Leitung 14 der Einheit 11 zu Synchronisierungszwecken zugeführt.

Wie zuvor ausgeführt worden ist, wird das Gerät beim ersten Impuls des Winkelschrittgebers eingeschaltet und durch die Abschaltautomatik 13 nach einer Zeitspanne von z.B. 10 oder 20 s nach Stillstand des Standtbahnwagens abgeschaltet. Die Abschaltautomatik 13 steht demnach mit der Einheit 11 in Verbindung und enthält im wesentlichen eine Zeitstufe, die nach 20 s nach dem letzten Signal des Winkelschrittgebers die Aufzeichnung unterbricht bzw. das Aufnahmegerät abschaltet. Die Impulse des Winkel-schrittgebers werden also dahingehend über-wacht, daß das Gerät automatisch abgeschaltet wird, wenn nach z.B. 20 s kein weiterer Schrittimpuls ankommt.

Dem Aufnahmekopf der Spur 2 werden über Leitungen 15 bis 19 die fünf weiteren ampliduen-modulierten Eingangs-Signale zugeführt. Da auf dieser Spur mehrere Signale aufgezeichnet werden, müssen entsprechend viele Generatoren 21 bis 23 zur Lieferung unterschiedlicher Trägerfrequenzen vorgesehen sein. Dabei wird zweckmäßigerweise auch der Taktgenerator 7 als Lieferant einer Trägerfrequenz herangezogen. Durch eine mit einem Kontakt 20 in Verbindung stehende gestrichelte Linie ist symbolisiert, daß die Frequenz des Generators 7 von dem über die Leitung 15 ankommenden Signal moduliert wird. Die weiteren von den Generatoren 21 bis 23 bereitgestellten Trägerfrequenzen werden von den auf Leitungen 16 bis 19 eintreffenden Signalen moduliert, wie durch gestrichelte Linien und weitere Kontakte 24 bis 27 angedeutet ist. Die Kontakte 20, 24 bis 27 symbolisieren entsprechende kontaktlose Elemente, die zur Amplitudenmodulation der Trägerfrequenzen geeignet sind. Sie brauchen in den meisten Fällen tatsächlich nur ein Schaltfunktion zu erfüllen. Sämtliche modulierten Trägerfrequenzen werden über eine Mischstufe 28 auf der zweiten Spur des Aufnahmegerätes aufgezeichnet. Mit 29 ist ferner eine Signalanpaßschaltung bezeichnet; damit soll lediglich angedeutet werden, daß die über die Leitungen 15 bis 19 eintreffenden Signale in eine Form gebracht werden, die zur Modulierung der Trägerfrequenzen geeignet ist.

Bei dem gewählten Anwendungsbeispiel wird über die Leitung 15 ein den Betriebszustand des Fahrens wiedergebendes Signal (Fahrsignal) zugeführt. Über die Leitung 16 ist ein dem Istwert des Stromes proportionales Signal (Stromistwertsignal) zugeführt. Über die Leitung 17 und 18 werden den Betriebszuständen Bremsen und Notbremsen entsprechende Signale gegeben. Durch einen Widerstand 30 ist angedeutet, daß die Amplitude der Trägerfrequenz des Generators 21 bei normaler Bremsung entsprechend vermindert wird, da dann für die beiden Betriebszustände nur eine einzige Trägerfrequenz benötigt wird.

Da der Lauf der beiden Spuren zynchron erfolgt, ist sichergestellt, daß über den zurückgelegten Fahrzeugweg sowie der erfolgten Schaltvorgänge entsprechend der Wertiget der aufgezeichneten Signale eine verbindliche Aussage gemacht werden kann.

Die Auswertung der aufgezeichneten Betriebszustände ist relativ einfach, da durch Selektiv-Verstärker im Auswertegerät alle Signale getrennt als Informationen verfügbar sind. Sie können z.B. in einem nachfolgenden Auflöse- und Schreibgerät, z.B. einem Oszillographen, sichtbar gemacht werden. Hierbei werden die 4-kHz-Signale des Generators 7 als Zeitrefernsignale benutzt und können in einer entsprechenden Ziel- und Anzeigeschaltung die jeweilige Fahrzeit unmittelbar anzeigen. Auf diese Weise kann ein Unfall bzw. die Unfallursachen ganz genau rekonstruiert werden. Bandlaufschawankungen haben somit keinen Einfluß auf die Zeitrekonstruktion. Die Genauigkeit hängt lediglich von der Genauigkeit des Taktgenerators 7 im Aufnahmegerät ab.

Die aufgezeichneten 4-kHz-Signale des Generators 7 können nach entsprechender Herabsetzung zur Steuerung des Auswertegerätes und der Auswerteschaltung des geschwindigkeitsproportionalen Ausgangssignals verwendet werden.

Mit 31 ist ein Kontrollsystem bezeichnet, mit dem die Funktionsfähigkeit des Registriergerätes überwacht wird. Durch eine Spule ist ein Wiedergabekopf 32 angedeutet, der mit dem Kontrollsystem 31 in Verbindung steht. Der Widergabektopf 32 ist der Spur 1 des Aufnahmekopfes zugeordnet und überwacht die aufmodulierten Signale. Dies kann mit Hilfe einer Zeitstufe erfolgen, die auf die Frequenz des Winkelschrittgebers abgestimmt ist. Führt die erste Spur des Gerätes kein entsprechendes Signal, so ist dies ein Zeichen dafür, daß das Gerät nicht in Ordnung ist. Dies kann daran liegen, daß entweder die Transporteinrichtung nicht funktioniert oder der Taktgenerator 7 oder der Winkelschrittgeber ausgefallen ist. Es könnte aber auch der Fall eintreten, daß nach dem Durchlauf einer Meßperiode die Spuren nicht gelöscht werden. Auch in diesem Fall könnten die Aufzeichnungen unbrauchbar werden. Es wird daher mit Hilfe eines Kondensators 33 die Frequenz des Löschoszillators 4 in das Kontrollsystem 31 übertragen und dort entsprechend ausgewertet. Beispielsweise können über eine entsprechende Gatterschaltung o.dgl. beide Signale gemeinsam ausgewertet werden. Mit Hilfe einer oder zweier verschiedenfarbiger Anzeigeleuchten 34 kann sowohl eine Störung als auch die Funktionsfähigkeit des Gerätes zur Anzeige gebracht werden. Die Kontrollampen 34 werden zweckmäßigerweise so angebracht, daß sie von dem Fahrer des Fahrzeuges leicht und jederzeit beobachtet werden können. Die Anzeige kann auch auf andere Weise vorgenommen werden. Ferner besteht die Möglichkeit, andere für eine später Auswertung sehr wichtige Betriebszustände allein oder auch zusätzlich zu überwachen.

Um auch auftretende Störsignalimpulse aufzeichnen zu können, die sich sowohl über Minuten als auch Mikrosekunden erstrecken können, ist eine Vergleichseinrichtung 35 zum Vergleich der im Taktgenerator 7 erzeugten Trägerfrequenz mit einer einen Betriebszustand kennzeichnenden Signalfrequenz vorgesehen. Im vorliegenden Fall wird über die Leitung 36 und die Signalanpaßschaltung 37 eine dem Stellungszwang einer Schaltwalze entsprechende Signalfrequenz eingegeben. Solange die Signalfrequenz Null bis 25 % der Taktfrequenz beträgt, wird im Modulator 44 die Trägerfrequenz im Rhythmus des Eingangssignals ein- und ausgeschaltet und das modulierte Signal über den Aufnahmekopf 38 auf ein der Spuren des Magnetbandes 39 aufgezeichnet.

Dieses Magnetband ist als Endlosband mit einer Geschwindigkeit von 9,5 cms ausgebildet und in einer Kassette 40 untergebracht. Es wird über die Führungsrollen 41 umgelenkt und auf einen Wickelteller 42 außen aufgewickelt und innen abgewickelt.

Überschreitet die Signalfrequenz einen vorgegebenen Vergleichswert, beträgt also das Verhältnis der Signalfrequenz zur Taktfrequenz mehr als 25 %, so wird von der Vergleichseinrichtung 35 über eine Abschaltautomatik 43 die Trägerfrequenz abgeschaltet, so daß die dem Stellungszwang entsprechende Signalfrequenz auf das Magnetband aufgezeichnet wird.

Die Verwendung einer verhältnismäßig kleinen Trägerfrequenz von z.B. 4 kHz und das Abschalten der Trägerfrequenz bei Überschreiten eines vorgegebenen Verhältnisses von Signalfrequenz zu Trägerfrequenz ermöglicht im Gegensatz zur Wahl einer höheren Trägerfrequenz von von z.B. 20 kHz eine relativ niedrige Bandgeschwindigkeit und dadurch eine hohe Aufzeichnungskapazität bei kleinem Raumbedarf, wobei darüber hinaus der Vorteil erreicht wird, daß die Dauer der Signalimpulse der Betriebszustandsinformationen oder der Störsignale sich von Minuten bis zu Mikrosekunden erstrecken kann.

Vorzugsweise sind die Bauelemente zum Registrieren der Betriebszustandsinformationen, der Vergleichseinrichtung 35 und der Abschaltautomatik 43, die abhängig von Überschreiten eines vorgegebenen Verhältnisses von Trägerfrequenz zu Signalfrequenz die Trägerfrequenz abschaltet, in einem tragbaren, mit einem Handgriff 47, Befestigungselementen 48 und einem zentralen Normstecker 45 für die Eingangssignale und Stromversorgung (Leitung 49) versehenen Gehäuse 46 angeordnet sind. Dadurch ist eine einfache Nachrüstung vorhandener Fahrzeuge auch für kurzzeitig gezielte Diagnosezwecke möglich und die Anordnung als Kompaktgerät ohne besonderen Montageaufwand einsetzbar. Das ganze Gerät kann auch von ungeschultem Personal in kurzer Zeit ein- und weider ausgebaut werden.

Einzelne Bauelemente, z.B. 7, 9, 11, 13 bzw. 21, 22, 23 bzw. 35, 37, 43, 44, sind jeweils zu einem Funktionsbaustein zusammengefaßt und die einzelnen Funktionsbausteine 50, 51, 52 sowie die Mischstufe 28, Signalanpaßschaltung 29 und das Kontrollsystem 31 sind als steckbare Module ausgebildet. Dadurch können im Bedarfsfalle einzelne Bausteine in kurzer Zeit ausgewechselt werden, wodurch die Wartung wesentlich vereinfacht wird.

## Patentansprüche

1. Vorrichtung zum Registrieren von Betriebszustandsinformationen eines beweglichen Gegenstandes, insbesondere eines Fahrzeuges, auf einem Mehrsprumagnetband (39), wobei eine der Spuren zum Aufzeichnen einer Zeitinformation benutzt wird und in jeder Spur mehrere Informationen registrierbar sind, und jedem der zu erfassenden Betriebszustände eine bestimmte unterschiedliche Trägerfrequenz zugeordnet ist, wobei das Träger frequenzsignal entsprechend der Größe und/oder Art des jeweiligen Betriebszustandes mit einer Signalfrequenz amplitudenmoduliert wird, und zumindest auf einer der Spuren mehrere amplitudenmodulierte Trägerfrequenzsignale gemeinsam aufgezeichnet werden, dadurch gekennzeichnet, daß eine Vergleichseinrichtung (35) zum Vergleich der einem Betribszustand zugeordneten Trägerfrequenz mit einer den jeweiligen Betriebszustand kennzeichnenden Signalfrequenz vorgesehen ist, welche beim Überschreiten eines vorgegebenen Prozentsates durch das Verhältnis von Signalfrequenz zu Trägerfrequenz die Abschaltung des Trägerfrequenz signals veranlaßt (43), so daß direkt die Signalfrequenz aufgereichnet wird.

2. Vorrichtung nach Anspruch 1, dadurch gekennzeichnet, daß Bauelemente zum Registrieren der Betriebszustandsinformationen, Bauelemente der Vergleichseinrichtung (35) und Bauelemente einer Ahschaltautomatik (43), die beim Überschreiten eines vorgegebenen Verhältnisses von Trägerfrequenz zu Signalfrequenz anspricht, in einem tragbaren, mit einem zentralen Normstecker (45) für die Signale und Stromversorgung versehenen Gehäuse (46) angeordnet sind.

3. Vorrichtung nach einem der vorhergehenden Ansprüche, dadurch gekennzeichnet, daß Bauelemente jeweils zu einem Funktionsbaustein (28; 29; 31; 50; 52) zusammengefaßt und die einzelnen Funktionsbausteine als steckbare Module ausgebildet sind.

## Revendications

1. Dispositif pour enregistrer des informations d'états de fonctionnement d'un objet mobile, notamment d'un véhicule, sur une bande à pistes multiples (39), dans lequel l'une des pistes est utilisée pour enregistrer une information de temps et plusieurs informations peuvent être enregistrées dans chaque piste, et une fréquence porteuse différente déterminée est associée à chacun des états de fonctionnement devant être détectés, et dans lequel le signal à fréquence porteuse est modulé en amplitude par une fréquence de signal, en fonction de la grandeur et/ou du type de l'état respectif de fonctionnement, et plusieurs signaux à fréquences porteuses modulés an amplitude sont enregistrés en commun au moins sur l'une des pistes, caractérisé par le fait qu'il est prévu un dispositif comparateur (35) servant à comparer la fréquence porteuse associée à un état de fonctionnement à une fréquence de signal caractérisant l'état respctif de fonctionnement, et qui, lors du dépassement d'un pourcentage prédéterminé par le rapport de la fréquence du signal à la fréquence porteuse, déclenche l'interruption du signal à fréquence porteuse (43), si bien que la fréquence du signal est enregistrée directement.

2. Dispositif suivant la revendication 1, caractérisé par le fait que des composants servant à enregistrer les informations d'état de fonctionnement, des composants du dispositif comparateur (35) et des composants d'un système automatique de débranchement (43), qui répond lors du dépassement lors d'un rapport prédéterminé de la fréquence porteuse à la fréquence du signal, sont disposés dans un boîtier portable (46) comportant un connecteur normalisé central (45) pour les signaux et l'alimentation en énergie.

3. Dispositif suivant l'une des revendications précédentes, caractérisé par le fait que des composants sont rassemblés pour former un module fonctionnel (28; 29; 31; 50; 51; 52) et que les différents modules fonctionnels sont réalisés sous la forme de modules enfichables.

**Claims**

1. A device for registering operating condition data of a mobile object, in particular of a vehicle, on a multiple track magnetic tape (39), where one of the tracks is used for recording an item of time information and a plurality of items of information can be registered in each track, and each of the operating conditions, which are to be determined, is assigned a specific variable carrier frequency, where the carrier frequency signal is amplitude-modulated by means of a signal frequency in accordance with the magnitude and/or type of the respective operating condition, and a plurality of amplitude-modulated carrier frequency signals are commonly recorded on at least one of the tracks, characterized in that there is provided a comparison device (35) for comparing the carrier frequency assigned to an operating condition with a signal frequency which characterises the respective operating condition and which on exceeding a predetermined percentage through the ratio of signal frequency to carrier frequency causes the disconnection of the carrier frequency signal (43), so that the signal frequency is directly recorded.

2. A device as claimed in claim 1, characterised in that the components for registering the operating condition data, components of the comparison device (35) and components of a disconnecting automatic unit (43), which responds on exceeding a predetermined ratio of carrier frequency to signal frequency, are arranged in a housing (46) which can be carried and which has a central standard plug (45) for the signals and current supply.

3. A device as claimed in one of the preceding claims, characterised in that the components are respectively combined to form a function module (28; 29; 31; 50; 51; 52) and the individual function modules are designed as plug-in type modules.

0 019 799